# FASCICULE DE BREVET EUROPEEN

(11) **EP 2 475 077 B1**
(45) Date de publication et mention de la délivrance du brevet: **15.05.2019**
(21) Numéro de dépôt: 11195859.1
(22) Date de dépôt: 28.12.2011
(51) Int. Cl.: H02K 11/21, H02K 11/33

(54) **Actionneur électromécanique à double alimentation**
Elektromechanischer Stellantrieb mit Doppelspeisung
Electromechanical actuator with double feeding

(30) Priorité: 10.01.2011 FR 1150151
(43) Date de publication de la demande: 11.07.2012
(73) Titulaire: Safran Landing Systems, 78140 Vélizy-Villacoublay (FR)
(72) Inventeur: Thibault, Julien, 91190 GIF-SUR-YVETTE (FR); Nierlich, Florent, 92250 LA GARENNE-COLOMBES (FR)
(74) Mandataire: Parzy, Benjamin Alain

(56) Documents cités:
- EP-A2- 1 898 517
- EP-A2- 1 997 703
- DE-A1- 10 234 848
- FR-A1- 2 945 680

## Description

La présente invention concerne le domaine des freins de roue d'aéronef et en particulier le domaine des actionneurs électromécaniques adaptés pour actionner ces freins.

On connaît des freins électromécaniques d'aéronef comportant une pluralité d'actionneurs comportant chacun un carter intégrant :
- un moteur électrique doté d'une partie fixe et d'une partie mobile ;
- un poussoir mobile en translation par rapport au carter selon un axe de déplacement du poussoir ;
- des moyens mécaniques de transformation d'un mouvement de déplacement de la partie mobile en un mouvement de translation du poussoir,
- un capteur de position de la seconde pièce fixe par rapport à la partie fixe.

La partie fixe du moteur porte un organe d'excitation adapté à provoquer le déplacement de la seconde pièce par rapport à ladite première pièce lorsque cet organe d'excitation est alimenté en courant électrique. Quant au capteur, il est généralement du type inductif et comporte un organe émetteur et un organe récepteur, l'organe émetteur étant adapté lorsqu'il est alimenté électriquement à exciter ledit organe récepteur qui génère en réponse un ou des signaux représentatifs de la position de la partie mobile par rapport à la partie fixe.

Ce type d'actionneur est généralement intégré dans une architecture de freinage qui fournit l'alimentation électrique aux actionneurs et récupère l'information du capteur pour commander un onduleur d'alimentation du moteur de l'actionneur et ainsi faire en sorte que les actionneurs appliquent un effort de freinage donné en réponse à une consigne de freinage.

Or il existe un risque qu'en cas de défaillance d'un des composants de l'actionneur ou de sa commande, cette défaillance soit commune à plusieurs actionneurs et génère une panne massive mettant en cause la capacité de l'aéronef à freiner.

Il est connu de résoudre ce problème en proposant d'utiliser sur le même aéronef des actionneurs de technologies différentes, de sorte qu'une panne affectant l'un des types d'actionneurs ne risque pas de toucher l'autre type d'actionneurs. Cependant une telle solution est très coûteuse, puisqu'elle impose le développement de types d'actionneurs et la gestion de références distinctes.

Le document brevet FR 2 945 680 décrit les caractéristiques structurelles de l'actionneur défini dans le préambule de la revendication 1 sauf qu'il n'est pas prévu pour un frein d'aéronef mais pour commander des volets de tuyère ou des aubes à calage variable d'un compresseur de turbomachine. Des systèmes de freinage sont connus des documents brevet : EP 1 898 517, EP 1 997 703 et DE 102 34 848.

### OBJET DE L'INVENTION

Un objet de l'invention est de proposer un actionneur permettant de diminuer le risque de défaillance de mode commun, tout en évitant de développer deux types d'actionneurs distincts.

### RESUME DE L'INVENTION

A cet effet l'actionneur de freinage pour frein d'aéronef est constitué suivant les caractéristiques de la revendication indépendante 1.

Ainsi l'actionneur de freinage selon l'invention permet de réduire le risque de dysfonctionnement de la fonction de freinage car il assure une redondance de l'excitation électrique dans l'organe d'excitation du moteur qui permet le déplacement de la partie mobile par rapport à la partie fixe.

Une forme de réalisation avantageuse de l'invention permet une redondance d'émission dans le capteur de position de la partie mobile.

Ainsi l'actionneur selon l'invention peut continuer à fonctionner et commander le déplacement du poussoir mobile :
- même si l'un quelconque des excitateurs n'est plus fonctionnel (par exemple si son alimentation électrique est défaillante et/ou si un des excitateurs est endommagé) ; et / ou
- même si l'un quelconque des émetteurs du capteur de position n'est plus fonctionnel (par exemple si son alimentation électrique est défectueuse et/ou si cet émetteur est intrinsèquement défaillant).

Cette disposition permet d'établir un fonctionnement beaucoup plus sûr. En effet, il suffit de faire en sorte que les alimentations des deux excitateurs et les alimentations des deux émetteurs soient distinctes (internes et/ou externes à l'actionneur). Ainsi, une panne commune du premier excitateur de tout ou partie des actionneurs peut être facilement compensée par l'utilisation du deuxième excitateur. On réduit le risque que la panne affectant les premiers excitateurs perturbe l'alimentation des deuxièmes excitateurs, puisque celle-ci n'est pas connectée aux premiers excitateurs. Il en est de même pour les émetteurs du capteur de position. Une panne commune des premiers émetteurs n'empêchera pas l'utilisation des deuxième émetteurs, et donc la fourniture d'un signal de position de la seconde pièce par rapport à la première nécessaire pour contrôler le moteur.

Avec un tel actionneurs, comme on décrit par la suite, on peut prévoir que :
- l'alimentation des excitateurs soit interne à l'actionneur et/ou externe à l'actionneur ; et/ou que
- l'alimentation des émetteurs soit interne à l'actionneur et/ou externe à l'actionneur.

On peut aussi prévoir que les excitateurs du moteur puissent être alimentés simultanément, pour par exemple générer un couple moteur supérieur à ce qu'il serait si un seul des deux excitateurs était alimenté à un moment donné.

On peut également prévoir que les émetteurs puissent être alimentés simultanément afin de permettre d'améliorer la précision de la mesure de position de la seconde pièce mobile par rapport à la première.

L'invention permet donc d'améliorer le taux de disponibilité de la fonction d'actionnement de frein pour aéronef.

Pour la mise en oeuvre de l'invention, comme décrit ci-après, on fait préférentiellement en sorte que la partie fixe soit un stator et que la partie mobile soit un rotor monté à rotation par rapport au stator. On fait aussi en sorte que les moyens mécaniques de transformation d'un mouvement de déplacement soient adaptés à transformer une rotation du rotor en une translation du poussoir et que le capteur de position soit un capteur de position angulaire du rotor par rapport au stator.

### BREVE DESCRIPTION DES DESSINS

L'invention sera mieux comprise à la lumière de la description détaillée d'un mode particulier de réalisation qui en est faite ci-après, à titre indicatif et nullement limitatif, en référence aux dessins annexés, dans lesquels:
- la figure 1 est une vue schématique d'une partie d'aéronef portant un atterrisseur portant des roues équipées de freins avec des actionneurs selon l'invention;
- la figure 2 est une vue en coupe d'une portion d'une des roues de la figure 1;
- la figure 3 est une vue schématique d'un actionneur selon l'invention ;
- la figure 4 est un schéma électrique de l'actionneur de la figure 3 et d'une partie de l'architecture de freinage associée.

### DESCRIPTION DETAILLEE DE L'INVENTION

L'invention est ici illustrée et détaillée en application à un frein d'atterrisseur de fuselage. Il va de soi qu'une telle application n'est pas limitative et que l'invention pourra être appliquée à d'autres atterrisseurs.

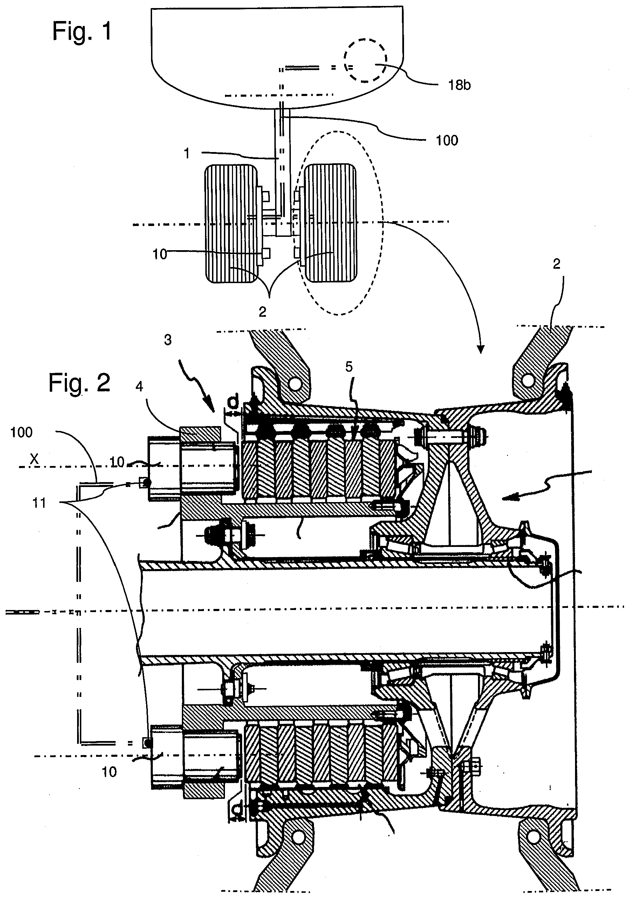

Comme illustré à la figure 1, l'atterrisseur 1 est articulé sur le fuselage de l'aéronef et comporte une extrémité basse portant des roues 2. Chacune de ces roues 2 est montée à rotation sur un essieu de l'atterrisseur et est freinée à l'aide d'un frein 3 correspondant s'étendant partiellement dans la roue.

Comme illustré à la figure 2, le frein 3 comporte plusieurs actionneurs de freinage 10 (seuls deux sont ici visibles) portés par une couronne 4. Les actionneurs 10 s'étendent en regard d'une pile de disques 5 aptes à être sélectivement pressés entre eux par les actionneurs 10 pour freiner la roue associée au frein. Les actionneurs 10 sont reliés au reste de l'architecture de freinage par des câbles électriques 100 provenant du fuselage et descendant le long de l'atterrisseur, ces câbles aboutissant à un connecteur 11 de l'actionneur 10. Ces câbles assurent aussi bien l'alimentation des différents composants électriques de l'actionneur que l'envoi ou la remontée des signaux nécessaires à la gestion de l'actionneur, ainsi que cela sera détaillé plus loin.

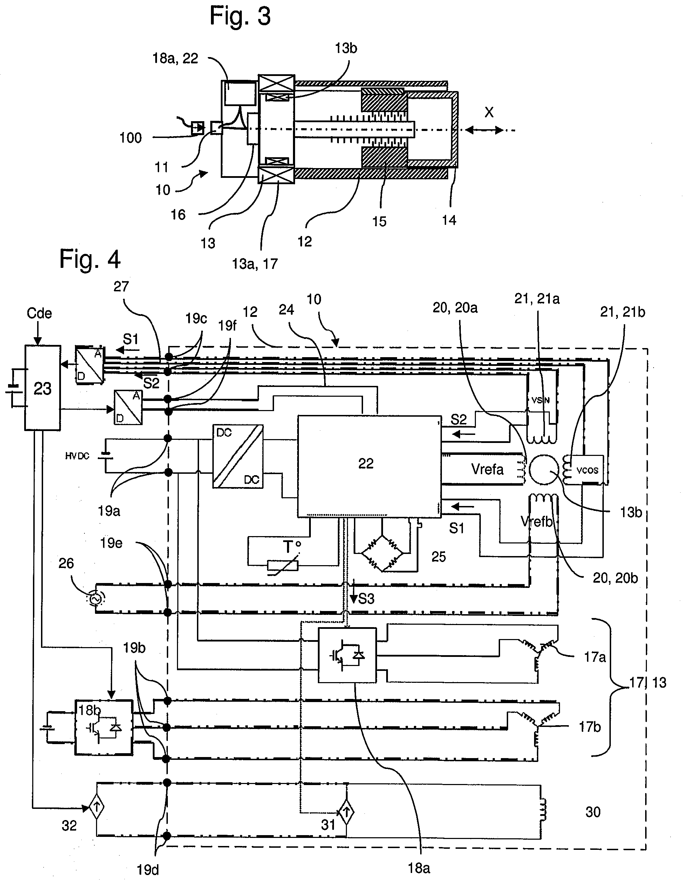

L'actionneur est maintenant décrit plus en détail en référence aux figures 3 et 4. Ainsi que cela est tout d'abord illustré à la figure 3, l'actionneur 10 comprend un carter 12 incorporant :
- un moteur électrique 13 doté d'un stator 13a et d'un rotor 13b monté à rotation par rapport au stator 13a ;
- un poussoir 14 mobile en translation selon un axe X de déplacement du poussoir ;
- un organe de liaison 15 pour transformer une rotation du rotor 13b en mouvement de déplacement du poussoir 14 selon ledit axe de déplacement du poussoir X.

L'actionneur comporte également un capteur de position angulaire 16 du rotor 13b par rapport au stator 13a adapté à émettre un ou des signaux représentatifs de la position angulaire du rotor. Ces signaux sont utilement exploités pour piloter un onduleur d'alimentation du moteur.

Comme illustré à la figure 4, le stator 13a porte un organe d'excitation 17 adapté à générer un champ magnétique tournant et ainsi provoquer la rotation du rotor 13b par rapport au stator 13a lorsque l'organe d'excitation 17 est alimenté en courant électrique.

Selon l'invention, l'organe d'excitation 17 comporte des premier et deuxième excitateurs 17a, 17b, chacun adaptés à générer un champ magnétique tournant pour provoquer la rotation du rotor 13b par rapport au stator 13a lorsqu'il est alimenté. Les excitateurs 17a, 17b sont adaptés à être alimentés indépendamment l'un de l'autre. Chacun de ces excitateurs 17a, 17b est par exemple formé de trois bobines ayant une borne commune et trois bornes d'alimentation adaptées à être soumises à des tensions de phase fournies par un onduleur. Chaque excitateur 17a, 17b est capable, lorsqu'il est alimenté, de provoquer à lui seul la rotation du rotor 13b.

Suivant l'invention, l'actionneur 10 comporte un onduleur intégré 18a qui alimente le premier excitateur 17a. L'autre excitateur 17b est quant à lui alimenté par un onduleur externe 18b, placé par exemple dans la soute de l'aéronef et alimentant le deuxième excitateur 17b via le câble 100.

L'onduleur interne 18a et l'onduleur externe 18b sont pilotés au moyen de signaux émis par le capteur de position angulaire 16. Plus précisément, le capteur de position 16 est ici du type inductif et comporte un organe émetteur 20 influençant un premier récepteur 21a et un deuxième récepteur 21b (en l'occurrence les premier et deuxième récepteurs sont respectivement formés par des première et seconde bobines réceptrices) qui émettent les signaux S1 et S2 déphasés l'un de l'autre de 90 degrés et dépendant de la position angulaire du rotor 13. La combinaison de ces deux signaux permet de déterminer la position angulaire du rotor, ainsi que cela est bien connu. A cet effet, l'actionneur 10 est équipé d'une unité de traitement 22, par exemple un microprocesseur associé à une mémoire, qui reçoit les signaux S1 et S2 et qui recompose une information de position angulaire du rotor 13b pour générer un signal S3 de commande de l'onduleur interne 18a (aussi appelé onduleur intégré 18a). Ainsi l'unité de traitement intégrée 22 commande l'onduleur intégré 18a en fonction d'au moins un des signaux S1, S2 chacun représentatif de la position angulaire du rotor 13b et ledit premier excitateur 17a est alimenté par l'onduleur intégré 18a en fonction de ces signaux S1 et S2.

Par ailleurs, les signaux S1, S2 sont également envoyés à un calculateur externe 23 pour être exploités par celui-ci afin de commander l'onduleur externe 18b. De préférence, les signaux S1, S2 sont remontés au calculateur externe 23 au moyen d'un bus 27 remontant le long de l'atterrisseur.

Selon l'invention, l'organe émetteur 20 comporte un premier émetteur 20a et un deuxième émetteur 20b indépendant du premier émetteur 20a. Le premier émetteur est formé par une première bobine émettrice et le second émetteur est formé par une deuxième bobine émettrice. Le premier émetteur 20a est alimenté en tension alternative Vrefa directement par l'unité de traitement intégrée 22, elle-même étant alimentée par une source de courant continue de l'aéronef. Le deuxième émetteur 20b est quant à lui alimenté en tension alternative Vrefb indépendamment du premier émetteur par une source de courant alternatif de l'aéronef.

Ainsi, la perte de l'unité de traitement intégrée 22 ne remet pas en cause le fonctionnement de l'actionneur, puisque le moteur de celui-ci peut être alimenté par l'onduleur externe 18b et contrôlé par le calculateur externe 23 recevant les signaux S1, S2 générés par le capteur de position dont le deuxième émetteur 20b est alimenté par une source externe.

Selon un aspect particulier de l'invention, l'unité de traitement intégrée 22 est reliée à une jauge de température T° intégrée permettant de surveiller la température du moteur, ainsi qu'à une jauge d'effort 25 permettant de connaître l'effort exercé par le poussoir sur la pile de disques. Les signaux générés par ces jauges permettent la mise en oeuvre par l'unité de traitement intégrée 22 d'algorithmes de commande de l'onduleur interne ou onduleur intégré 18a pour assurer par exemple un asservissement en effort, ou encore une limitation du courant circulant dans le moteur si la température de celui-ci dépasse un seuil prédéterminé.

Selon un autre aspect particulier de l'invention, l'actionneur est équipé d'un organe de blocage 30 du poussoir 14 en position permettant d'assurer un freinage de parc.

L'organe de blocage 30 est préférentiellement bistable et est commandé par un relais interne 31 qui adapté à provoquer le blocage du poussoir 14 à réception d'un signal de commande de blocage tel qu'une première impulsion et à libérer le poussoir 14 à réception d'un signal de commande de déblocage tel qu'une deuxième impulsion, les signaux de commande étant générés par l'unité de traitement intégré 21 en réponse à un ordre de freinage de parc ou à un ordre de libération.

L'organe de blocage 30 peut aussi être monostable et on peut alors choisir que les signaux de commande de blocage et de déblocage soient des niveaux de courant prédéterminés.

Selon encore un autre aspect particulier de l'invention, un relais externe 32 est disposé en parallèle du relai interne 31 le relais externe 32 pouvant être commandé indépendamment du relais interne 31 pour commander l'organe de blocage 30.

Ainsi la fonction de commande du blocage de frein est sécurisée de façon redondante et dissymétrique ce qui réduit les risques de défaillance de cette commande par mode de panne commun.

Pour des raisons de facilité d'installation et de démontage de l'actionneur intégré 10 sur la couronne du frein, les différents bornes de connexion 19a, 19b, 19c, 19d, 19e, 19f de signaux et de puissance de l'actionneur (connexion à l'onduleur externe, connexion au relais externe, connexion aux diverses sources d'alimentation, connexion au bus série...) sont regroupées dans le seul connecteur 11 appartenant à l'actionneur 1.

En particulier, comme illustré sur la figure 4, l'onduleur intégré 18a et le premier émetteur 20a de l'organe émetteur 20 du capteur 16 sont reliés à des premières bornes 19a de l'actionneur 10 de manière à pouvoir être alimentés par une même source d'alimentation externe à l'actionneur. Le deuxième excitateur 17b est câblé avec des deuxièmes bornes 19b de l'actionneur de manière à pouvoir être alimenté par un onduleur externe 18b à l'actionneur 10.

L'organe récepteur du capteur est relié à des troisièmes bornes 19c de l'actionneur de manière à pouvoir transmettre ledit au moins un signal S1, S2 représentatif de la position angulaire du rotor au calculateur externe 23 pour qu'il commande ledit onduleur externe 18b en fonction d'au moins un des signaux S1, S2 représentatifs de la position angulaire du rotor.

Sont également visibles sur cette figure 4, des bornes externes de blocage 19d accessibles depuis l'extérieur de l'actionneur 10 et permettant de transmettre les signaux de commande de blocage et de déblocage à l'organe de blocage 30 via un relais externe 32 commandé par le calculateur externe 23 et sans passer par le relais interne 31.

Sont également visibles, des bornes externes 19e reliant le deuxième émetteur 20b à une source d'alimentation externe 26 d'excitation de l'émetteur 20b.

Enfin on voit des bornes 19f appartenant à un port série 24 de l'actionneur 10. Ces bornes 19f sont accessibles depuis l'extérieur de l'actionneur 10 et permettent d'échanger des données entre le calculateur externe 23 et l'unité de traitement intégrée 22 qui est reliée au port série 24.

On peut prévoir par exemple qu'une valeur cible représentative du courant d'alimentation de l'excitateur 17a soit transmise du calculateur externe 23 à l'unité de traitement intégrée 22 qui génère le signal S3 de commande de l'onduleur interne 18a en fonction de cette dite valeur cible.

Il est à noter que dans un mode de réalisation de l'invention, le port série 24 qui est relié, via des bornes 19f, d'une part à l'unité de traitement intégrée 22 et d'autre part au calculateur externe 23, peut suffire à transmettre, au calculateur 23, les signaux de l'ensemble des capteurs reliés à l'unité de traitement intégrée 22. En l'occurrence, ce port série 24 peut être adapté pour transmettre les signaux / informations provenant des capteurs de position 16, jauges d'effort 25 et de température T°, et éventuellement des jauges transmettant des signaux représentatifs des courants délivrés à chacun des excitateurs de l'organe d'excitation 17.

L'invention n'est pas limitée à ce qui vient d'être décrit, mais englobe au contraire toute variante entrant dans le cadre défini par les revendications.

En particulier, bien que le moteur de l'actionneur décrit ait un stator et un rotor formant respectivement les parties fixe et mobile du moteur, l'invention s'applique également à un actionneur à moteur linéaire, dont la partie mobile se déplace linéairement par rapport à la partie fixe.

## Revendications

1. Actionneur de freinage (10) pour frein (3) d'aéronef, comprenant un carter (12) intégrant :
- un moteur électrique (13) comprenant une partie fixe (13a) et d'une partie mobile (13b) par rapport à la partie fixe (13a) ; la partie fixe (13a) portant un organe d'excitation (17) adapté à entraîner le déplacement de la partie mobile (13b) lorsque cet organe d'excitation (17) est alimenté électriquement,
- un poussoir (14) mobile en translation par rapport au carter (12) selon un axe de déplacement du poussoir (X) ;
- des moyens mécaniques de transformation d'un mouvement de déplacement de la partie mobile du moteur en un mouvement de translation du poussoir (15),
- un capteur de position (16) de la partie mobile (13b) par rapport à la partie fixe (13a) ; le capteur de position (16) comportant un organe émetteur (20) et un organe récepteur (21), l'organe émetteur (20) étant adapté lorsqu'il est alimenté électriquement à exciter ledit organe récepteur (21) au moins lorsque la partie mobile (13b) se déplace par rapport à la partie fixe (13a), l'organe récepteur (21) étant adapté à générer au moins un signal (S1, S2) représentatif de la position de la partie mobile lorsque cet organe récepteur (21) est excité par ledit organe émetteur (20) ;
- l'organe d'excitation (17) du moteur comporte au moins des premier et deuxième excitateurs (17a, 17b), chaque excitateur étant adapté, à entraîner le déplacement de la partie mobile (13b) par rapport à la partie fixe (13a) lorsqu'il est alimenté, ces excitateurs (17a, 17b) étant agencés pour pouvoir être alimentés électriquement indépendamment l'un de l'autre ; et l'organe émetteur (20) du capteur de position (16) comporte au moins des premier et deuxième émetteurs (20a, 20b), chaque émetteur (20a, 20b) étant adapté, lorsqu'il est alimenté, à entraîner l'émission d'au moins un signal (S1, S2) représentatif de la position de la partie mobile (13b) par le récepteur (21), les émetteurs (20a, 20b) étant agencés pour pouvoir être alimentés électriquement indépendamment l'un de l'autre; l'actionneur (10) étant **caractérisé en ce qu'**il comporte en outre un onduleur intégré (18a) dans le carter de l'actionneur et adapté à alimenter ledit premier excitateur (17a), cet onduleur intégré (18a) étant relié à des premières bornes (19a) de l'actionneur (10) de manière à pouvoir être alimenté par une source d'alimentation externe à l'actionneur ; et
- le deuxième excitateur (17b) étant câblé avec des deuxièmes bornes (19b) de l'actionneur de manière à pouvoir être alimenté par un onduleur externe (18b) à l'actionneur (10) .

2. Actionneur de freinage selon la revendication 1, dans lequel, l'onduleur intégré (18a) et le premier émetteur (20a) de l'organe émetteur (20) du capteur (16) sont reliés aux premières bornes (19a) de l'actionneur (10) de manière à pouvoir être alimentés par la même source d'alimentation externe à l'actionneur.

3. Actionneur de freinage selon l'une quelconque des revendications 1 ou 2, dans lequel la partie fixe est un stator (13a) et la partie mobile est un rotor (13b) monté à rotation par rapport au stator, dans lequel les moyens mécaniques de transformation d'un mouvement de déplacement sont adaptés à transformer une rotation du rotor en une translation du poussoir (15), dans lequel ledit capteur de position (16) est un capteur de position angulaire (16) du rotor (13b) par rapport au stator (13a).

4. Actionneur de freinage (10) pour aéronef selon la revendication 3, dans lequel le capteur de position angulaire (16) est du type inductif :
- l'organe émetteur (20) du capteur (16) comportant des première et deuxième bobines émettrices formant respectivement les premier et deuxième émetteurs respectifs (20a, 20b) ; et
- l'organe récepteur (21) du capteur comportant des premier et second récepteurs (21a, 21b) chacun formé par une bobine réceptrice, ces premier et second récepteurs (21a, 21b) étant respectivement adaptées à générer des premier et second signaux respectifs (S1, S2) représentatifs de la position angulaire du rotor (13b) lorsque l'un au moins desdits émetteurs (20a, 20b) est alimenté en tension alternative (Vrefa, Vrefb).

5. Actionneur de freinage (10) pour aéronef selon la revendication 3, comportant un onduleur intégré (18a) dans un carter de l'actionneur (12) et adapté à alimenter ledit premier excitateur (17a).

6. Actionneur selon la revendication 3, comportant un onduleur intégré (18a) dans le carter (12) de l'actionneur (10) et adapté à alimenter ledit premier excitateur (17a), ledit actionneur (10) comportant une unité de traitement intégrée (22) dans ledit carter (12) de l'actionneur (10) apte à commander ledit onduleur intégré (18a) en fonction d'au moins un signal (S1, S2) représentatif de la position angulaire du rotor (13b).

7. Actionneur selon l'une quelconque des revendications 3 à 6, tel que ledit organe récepteur du capteur est relié à des troisièmes bornes (19c) de l'actionneur de manière à pouvoir transmettre ledit au moins un signal (S1, S2) représentatif de la position angulaire du rotor à un calculateur externe (23) à l'actionneur qui est apte à commander ledit onduleur externe (18b) en fonction du au moins un signal (S1, S2) représentatif de la position angulaire du rotor.

8. Actionneur selon la revendication 3, tel qu'il comporte un organe de blocage (30) en position du poussoir, cet organe de blocage (30) étant adapté à provoquer le blocage du poussoir (14) à réception d'un signal de commande de blocage et à libérer ce poussoir à réception d'un signal de commande de déblocage, l'organe de blocage étant :
- d'une part relié électriquement à un relai interne 31 pour commander l'organe de blocage ; et
- d'autre part relié électriquement à des bornes externes de blocage (19d) dudit actionneur de manière à pouvoir recevoir les signaux de commande de blocage et de déblocage via ces dites bornes externe de blocage (19d) sans passer par ledit relais interne (31).

9. Frein pour aéronef comportant au moins un actionneur selon l'une quelconque des revendications précédentes, le frein comportant en outre une pile de disques (5) aptes à être pressés entre eux par l'actionneur (10) pour freiner une roue (2) associée au frein.

10. Dispositif de freinage pour aéronef comportant au moins un frein selon la revendication précédente et comportant :
- un onduleur externe (18b) à l'actionneur (10) relié au second excitateur (17b) pour l'alimenter sélectivement ; et
- un onduleur intégré (18a) à l'actionneur (10) relié au premier excitateur (17a) du moteur pour l'alimenter.

## Patentansprüche

1. Bremsaktor (10) für eine Luftfahrzeugbremse (3), umfassend ein Gehäuse (12), in dem integriert sind:
- ein Elektromotor (13), der einen ortsfesten Teil (13a) und einen in Bezug auf den ortsfesten Teil (13a) beweglichen Teil (13b) umfasst; wobei der ortsfeste Teil (13a) ein Erregerelement (17) trägt, das geeignet ist, die Verschiebung des beweglichen Teils (13b) zu veranlassen, wenn dieses Erregerelement (17) elektrisch versorgt wird,
- ein Stößel (14), der in Bezug auf das Gehäuse (12) entlang einer Verschiebungsachse (X) des Stößels in Translation beweglich ist;
- mechanische Umwandlungsmittel zur Umwandlung einer Verschiebebewegung des beweglichen Teils des Motors in eine Translationsbewegung des Stößels (15),
- ein Positionssensor (16) zur Positionserfassung des beweglichen Teils (13b) in Bezug auf den ortsfesten Teil (13a); wobei der Positionssensor (16) ein Sendeelement (20) und ein Empfangselement (21) umfasst, wobei das Sendeelement (20), wenn es elektrisch versorgt wird, geeignet ist, das genannte Empfangselement (21) zumindest dann zu erregen, wenn sich der bewegliche Teil (13b) in Bezug auf den ortsfesten Teil (13a) verschiebt, wobei das Empfangselement (21) geeignet ist, zumindest dann ein Signal (S1, S2) zu erzeugen, das repräsentativ für die Position des beweglichen Teils ist, wenn dieses Empfangselement (21) von dem genannten Sendeelement (20) erregt wird;
- wobei das Erregerelement (17) zum Erregen des Motors mindestens erste und zweite Erreger (17a, 17b) umfasst, wobei jeder Erreger geeignet ist, die Verschiebung des beweglichen Teils (13b) in Bezug auf den ortsfesten Teil (13a) zu veranlassen, wenn es mit Strom versorgt wird, wobei diese Erreger (17a, 17b) ausgebildet sind, um unabhängig voneinander elektrisch versorgt werden zu können; und
wobei das Sendeelement (20) des Positionssensors (16) mindestens erste und zweite Sender (20a, 20b) umfasst, wobei jeder Sender (20a, 20b), wenn er mit Strom versorgt wird, geeignet ist, das Senden mindestens eines Signals (S1, S2), das repräsentativ für die Position des beweglichen Teils ist, durch den Empfänger (21) zu verursachen, wobei die Sender (20a, 20b) ausgebildet sind, um unabhängig voneinander elektrisch versorgt werden zu können;
wobei der Aktor (10) **dadurch gekennzeichnet ist, dass** er ferner einen in das Gehäuse des Aktors integrierten Wechselrichter (18a) umfasst, der geeignet ist, den genannten ersten Erreger (17a) mit Strom zu versorgen, wobei dieser integrierte Wechselrichter (18a) mit ersten Klemmen (19a) des Aktors (10) derart verbunden ist, dass er von einer Versorgungsquelle außerhalb des Aktors versorgt werden kann; und
- wobei der zweite Erreger (17b) mit zweiten Klemmen (19b) des Aktors derart verkabelt ist, dass er von einem Wechselrichter (18b) außerhalb des Aktors (10) versorgt werden kann.

2. Bremsaktor nach Anspruch 1, bei dem der integrierte Wechselrichter (18a) und der erste Sender (20a) des Sendeelements (20) des Sensors (16) mit den ersten Klemmen (19a) des Aktors (10) derart verbunden sind, dass sie von derselben Versorgungsquelle außerhalb des Aktors versorgt werden können.

3. Bremsaktor nach einem der Ansprüche 1 oder 2, bei dem der ortsfeste Teil ein Stator (13a) ist und der bewegliche Teil ein Rotor (13b) ist, der in Bezug auf den Stator drehbar gelagert ist, bei dem die mechanischen Umwandlungsmittel zur Umwandlung einer Verschiebebewegung geeignet sind, eine Drehung des Rotors in eine Translationsbewegung des Stößels (15) umzuwandeln, bei dem der genannte Positionssensor (16) ein Winkelpositionssensor (16) zur Winkelpositionserfassung des Rotors (13b) in Bezug auf den Stator (13a) ist.

4. Luftfahrzeugbremsaktor (10) nach Anspruch 3, bei dem der Winkelpositionssensor (16) vom induktiven Typ ist:
- wobei das Sendeelement (20) des Sensors (16) erste und zweite Sendespulen umfasst, die den ersten bzw. den zweiten Sender (20a, 20b) bilden; und
- wobei das Empfangselement (21) des Sensors erste und zweite Empfänger (21a, 21b) umfasst, die jeweils aus einer Empfangsspule gebildet sind, wobei diese ersten und zweiten Empfänger (21a, 21b) jeweils angepasst sind, erste bzw. zweite Signale (S1, S2) zu erzeugen, die repräsentativ für die Winkelposition des Rotors (13b) sind, wenn mindestens einer der genannten Sender (20a, 20b) mit Wechselspannung (Vrefa, Vrefb) versorgt wird.

5. Luftfahrzeugbremsaktor (10) nach Anspruch 3, umfassend einen in ein Gehäuse des Aktors (12) integrierten Wechselrichter (18a), der geeignet ist, den genannten ersten Erreger (17a) mit Strom zu versorgen.

6. Aktor nach Anspruch 3, umfassend einen in das Gehäuse (12) des Aktors (10) integrierten Wechselrichter (18a), der geeignet ist, den genannten ersten Erreger (17a) zu versorgen, wobei der Aktor (10) eine in das Gehäuse (12) des Aktors (10) integrierte Verarbeitungseinheit (22) umfasst, die geeignet ist, den genannten integrierten Wechselrichter (18a) in Abhängigkeit von mindestens einem Signal (S1, S2) zu steuern, das repräsentativ für die Winkelposition des Rotors (13b) ist.

7. Aktor nach einem der Ansprüche 3 bis 6, derart, dass das genannte Empfangselement des Sensors mit drei Klemmen (19c) des Aktors derart verbunden ist, dass es das genannte mindestens eine Signal (S1, 52), das repräsentativ für die Winkelposition des Rotors ist, an einen Rechner (23) außerhalb des Aktors übertragen kann, wobei der Rechner geeignet ist, den genannten externen Wechselrichter (18b) in Abhängigkeit von mindestens einem Signal (S1, S2) zu steuern, das repräsentativ für die Winkelposition des Rotors ist.

8. Aktor nach Anspruch 3, derart, dass er ein Sperrelement (30) zum Sperren der Position des Stößels umfasst, wobei dieses Sperrelement (30) geeignet ist, beim Empfang eines Sperrsteuersignals das Sperren des Stößels (14) zu verursachen und diesen Stößel beim Empfang eines Entsperrsteuersignals freizugeben, wobei das Sperrelement:
- einerseits elektrisch mit einem internen Relais (31) verbunden ist, um das Sperrelement zu steuern; und
- andererseits elektrisch mit externen Sperrklemmen (19d) des Aktors derart verbunden ist, dass es die Sperr- und Entsperrsteuersignale über diese genannten externen Sperrklemmen (19d) empfangen kann, ohne durch das genannte interne Relais (31) hindurchzugehen.

9. Bremse für ein Luftfahrzeug, umfassend mindestens einen Aktor nach einem der vorhergehenden Ansprüche, wobei die Bremse ferner einen Stapel von Scheiben (5) umfasst, die geeignet sind, von dem Aktor (10) aneinander gedrückt zu werden, um ein zur Bremse zugehöriges Rad (2) zu bremsen.

10. Bremsvorrichtung für ein Luftfahrzeug, umfassend mindestens eine Bremse nach dem vorhergehenden Anspruch und umfassend:
- einen Wechselrichter (18b) außerhalb des Aktors (10), der mit dem zweiter Erreger (17b) verbunden ist, um diesen selektiv mit Strom zu versorgen; und
einen in den Aktor (10) integrierten Wechselrichter (18b), der mit dem ersten Erreger (17a) des Motors verbunden ist, um diesen mit Strom zu versorgen.

## Claims

1. A braking actuator (10) for an aircraft brake (3), the actuator comprising a casing (12) integrating:
an electric motor (13) comprising a stationary portion (13a) and a movable portion (13b) that is movable relative to the stationary portion (13a); the stationary portion (13a) carrying an exciter member (17) adapted to drive the movement of the movable portion (13b) when the exciter member (17) is electrically powered;
• a pusher (14) that is movable in translation relative to the casing (12) along a pusher travel axis (X) ;
• mechanical means for transforming travel movement of the movable portion of the motor into movement in translation of the pusher (15); and
• a position sensor (16) for sensing the position of the movable portion (13b) relative to the stationary portion (13a); the position sensor (16) comprising a transmitter member (20) and a receiver member (21), the transmitter member (20) being adapted, when powered electrically, to excite said receiver member (21) at least when the movable portion (13b) is moving relative to the stationary portion (13a), the receiver member (21) being adapted to generate at least one signal (S1, S2) representative of the position of the movable portion when said receiver member (21) is excited by said transmitter member (20);
the exciter member (17) of the motor comprises at least first and second exciters (17a, 17b), each exciter being adapted, when powered, to drive the movement of the movable portion (13b) relative to the stationary portion (13a), these exciters (17a, 17b) being arranged to be capable of being powered electrically independently from each other; and
the transmitter member (20) of the position sensor (16) comprises at least first and second transmitters (20a, 20b), each transmitter (20a, 20b) being adapted, on being powered, to cause at least one signal (S1, S2) representative of the position of the movable portion (13b) to be sent by the receiver (21), the transmitters (20a, 20b) being arranged to be capable of being electrically powered independently of each other; the actuator (10) being **characterized in that** it further comprises an integrated inverter (18a) inside the casing of the actuator (12) and adapted to power said first exciter (17a), this integrated inverter (18a) being connected to first terminals (19a) of the actuator (10) so as to be capable of being powered by a power source external to the actuator; and - the second exciter (17b) is wired to second terminals (19b) of the actuator so as to be capable of being powered by an external inverter (18b) external to the actuator (10).

2. The braking actuator according to claim 1, wherein the integrated inverter (18a) and the first transmitter (20a) of the transmitter member (20) of the sensor (16) are connected to the first terminals (19a) of the actuator (10) so as to be capable of being powered by the same power source external to the actuator.

3. The braking actuator according to any of claims 1 or 2, wherein the stationary portion is a stator (13a) and the movable portion is a rotor (13b) mounted to rotate relative to the stator, wherein the mechanical means for transforming travel movement are adapted to transform rotation of the rotor into a movement in translation of the pusher (15), and wherein the position sensor (16) is an angular position sensor (16) for sensing the angular position of the rotor (13b) relative to the stator (13a).

4. The braking actuator (10) for aircraft according to claim 3, wherein the angular position sensor (16) is of the inductive type:
• the transmitter member (20) of the sensor (16) comprising first and second transmitter coils respectively forming the first and second transmitters (20a, 20b); and
• the receiver member (21) of the sensor including first and second receivers (21a, 21b) each formed by a receiver coil, the first and second receivers (21a, 21b) being adapted to generate respective first and second signals (S1, S2) representative of the angular position of the rotor (13b) when at least one of said transmitters (20a, 20b) is powered with an alternating voltage (Vrefa, Vrefb).

5. The braking actuator (10) for aircraft according to claim 3, including an integrated inverter (18a) in a casing of the actuator (12) and adapted to power said first exciter (17a).

6. The actuator according to claim 3, including an integrated inverter (18a) inside the casing (12) of the actuator (10) and adapted to power said first exciter (17a), said actuator (10) including an integrated processor unit (22) inside said casing (12) of the actuator (10) and suitable for controlling said integrated inverter (18a) as a function of at least one signal (S1, S2) representative of the angular position of the rotor (13b).

7. The actuator according to anyone of claims 3 to 6, wherein said receiver member of the sensor is connected to third terminals (19c) of the actuator in such a manner as to be capable of sending said at least one signal (S1, S2) representative of the angular position of the rotor to an external calculation unit (23) external to the actuator, which unit is suitable for controlling said external inverter (18b) as a function of the at least one signal (S1, S2) representative of the angular position of the rotor.

8. The actuator according to claim 3, such that it includes a blocking member (30) for blocking the pusher in position, said blocking member (30) being adapted to cause the pusher (14) to be blocked on receiving a blocking control signal and to release said pusher on receiving an unblocking control signal, the blocking member being:
• firstly electrically connected to an internal relay (31) for controlling the blocking member; and
• secondly electrically connected to external blocking terminals (19d) of said actuator so as to be capable of receiving the blocking and unblocking control signals via said external blocking terminals (19d) without passing via said internal relay (31).

9. An aircraft brake including at least one actuator according to any preceding claim, the brake further including a stack of disks (5) suitable for being pressed together by the actuator (10) in order to brake a wheel (2) associated with the brake.

10. A braking device for aircraft including at least one brake according to the preceding claim, and comprising:
• an external inverter (18b) external to the actuator (10) and connected to the second exciter (17b) in order to power it selectively; and
• an integrated inverter (18a) integrated in the actuator (10) and connected to the first exciter (17a) of the motor in order to power it.
